# EUROPÄISCHE PATENTANMELDUNG

(11) **EP 1 122 862 A2**
(43) Veröffentlichungstag der Anmeldung: **08.08.2001**
(21) Anmeldenummer: 00128395.1
(22) Anmeldetag: 22.12.2000
(51) Int. Cl.: H02K 3/52

(54) **Mehrphasen-Motor**

(30) Priorität: 01.02.2000 DE 10004059
(71) Anmelder: Bühler Motor GmbH, 90459 Nürnberg (DE)
(72) Erfinder: Bernreuther, Georg, 90449 Nürnberg (DE); Hilberg, Frank, 34134 Kassel (DE); Bopp, Gerhard, 90469 Nürnberg (DE)

(57) **Zusammenfassung**

Mehrphasen-Motor, insbesondere Schrittmotor oder Synchronmotor, mit einem Rotor und im wesentlichen konzentrisch zum Rotor angeordneten Statorteilen, die jeweils einen Kern und eine aus einem Wickeldraht auf diesen gewickelte Spule aufweisen, sowie einem Steckerteil mit Steckerstiften oder einer Leiterplatte mit Leiterbahnen zum elektrischen Anschluß an eine Stromversorgung, wobei die Wickeldrähte im wesentlichen direkt mit den Steckerstiften oder Leiterbahnen verbunden sind und
zwischen jeder Spule und dem Steckerteil bzw. der Leiterplatte ein elektrisch isolierendes Verbindungsstück vorgesehen ist, welches einen Abschnitt des zugehörigen Wickeldrahtes aufnimmt.

## Beschreibung

Die Erfindung betrifft einen Mehrphasen-Motor, insbesondere Schrittmotor oder Synchronmotor, nach dem Oberbegriff des Anspruchs 1.

Derartige Mehrphasen-Motoren werden in Stellantrieben, insbesondere für Heizungs-, Lüftungs-oder Klimaklappen zur Mischung von Warm- und Kaltluft und zum Verteilen der Luftströme, eingesetzt. Es sind Applikationen bekannt, bei denen mehr als 10 derartiger Antriebe in einer vergleichsweise kompakten Vorrichtung - etwa einer Klimaanlage - unterzubringen sind. Die Anforderungen an den in Anspruch genommenen Bauraum, die Zuverlässigkeit und die zulässigen Gestehungskosten sind entsprechend hoch.

Bei bekannten Mehrphasen-Motoren dieser Art werden die Statorspulen mittels Verbindungsanordnungen, die mehrere Verbindungsstellen aufweisen, mit einem Steckerteil zum elektrischen Anschluß an eine Stromversorgung verbunden. Bei diesen Verbindungsanordnungen sind pro Pol in der Regel drei Kontaktstellen vorhanden, bei einer Verbindung mit Leitblechen beispielsweise die Kontaktbereiche Steckerstift/Leitblech, Leitblech/Kontaktstift und Kontaktstift/Wickeldraht. Ein Mehrphasen-Motor mit einer Leitblechanordnung zur Verbindung zwischen Steckerkontakten und den Wickeldrähten mehrerer Spulen ist beispielsweise aus der DE 199 09 227 A1 bekannt.

Die Verbindung in den einzelnen Kontaktbereichen wird durch Löten, Schweißen, Klemmen, Anfedern oder andere bekannte Techniken hergestellt. Jede dieser Verbindungstechniken birgt ein Ausfallrisiko, und die Herstellung mehrerer Verbindungen erfordert einen relativ hohen fertigungstechnischen Aufwand und ist daher kostspielig. Das Vorhandensein einer Vielzahl separater Bauteile in einer solchen Verbindungsanordnung erhöht die Gestehungskosten des Motors zusätzlich.

Der Erfindung liegt die Aufgabe zugrunde, einen verbesserten Mehrphasen-Motor der gattungsgemäßen Art anzugeben, der sich insbesondere durch verringerte Herstellungskosten und erhöhte Zuverlässigkeit auszeichnet.

Diese Aufgabe wird durch einen Mehrphasen-Motor mit den Merkmalen des Anspruchs 1 gelöst.

Die Erfindung schließt den wesentlichen Gedanken ein, die Anzahl der Verbindungsstellen bzw. Kontaktbereiche zum externen Anschluß der Spulendrähte (Wickeldrähte) der Statorteile zu reduzieren. Sie schließt weiter den Gedanken ein, diese Reduzierung dadurch zu erreichen, daß der Wickeldraht im wesentlichen direkt mit dem den externen Anschluß herstellenden Leiter, insbesondere einem Steckerstift oder auch der Leiterbahn einer Leiterplatte, verbunden wird. Vom bisher üblichen Vorsehen von Leitblechen mit zusätzlichen Kontaktstiften bzw. Anschlußelementen wird damit bewußt abgegangen.

Zudem schließt die Erfindung den Gedanken ein, durch ein geeignetes Verbindungsstück eine mechanisch stabile, den Anschlußabschnitt des Spulendrahtes schützende, Verbindung zwischen dem eigentlichen Spulenkörper und dem nach außen führenden Kontaktelement herzustellen.

In einer zweckmäßigen Ausführung haben die Spulen jeweils einen Spulenträger, der mit dem jeweiligen Verbindungsstück entweder einstückig ausgebildet oder zumindest bewegungsfest verbunden ist. Die Verbindung kann grundsätzlich auch lösbar - beispielsweise als Steckverbindung ausgeführt - sein, muß aber in jedem Fall den mechanischen Schutz des darauf bzw. darin befindlichen Wickeldrahtabschnittes gewährleisten.

In einer weiteren bevorzugten Ausführung eines Mehrphasen-Motors mit Steckerteil zur externen Stromversorgung ist jedes Verbindungsstück mit einer die jeweiligen Steckerstifte haltenden Stiftleiste einstückig ausgebildet oder zumindest fest verbunden. Auch für diese Verbindung gilt, das sie nicht notwendigerweise unlösbar ist, aber im Gebrauch des Motors mechanische Beanspruchungen vom Wickeldraht fernhalten muß. In besonders bevorzugter Weise sind Spulenträger, Verbindungsstück und Stiftleiste miteinander einstückig ausgebildet.

Die Verbindungsstücke ebenso wie die Spulenträger und Stiftleisten bestehen aus einem elektrisch isolierenden Material, insbesondere einem in der Elektrotechnik/Elektronik gebräuchlichen Konstruktions-Kunststoff.

Ein besonders einfach herzustellender und mechanisch stabiler Aufbau ergibt sich, wenn der Spulenträger einer der Spulen mit dem zugehörigen Verbindungsstück und einem Steckergehäuse einstückig ausgebildet ist. In einer alternativen, ebenfalls leicht herstellbaren Ausführung trägt eine der Stiftleisten mittels einer Rastverbindung ein separat gefertigtes Steckergehäuse.

Eine einfache Herstellung der einzelnen Spule-Anschlußelement-Baugruppen und deren präzise und zugleich leichte Montage wird durch eine bevorzugte Ausführung ermöglicht, bei der in dem Steckerteil bzw. einer der Stiftleisten eine erste Mehrzahl von Steckerstiften fest angebracht und eine zweite Mehrzahl von Steckerstiften (welche ihrerseits in einer separaten Stiftleiste fest angebracht sind) lösbar gehaltert ist. Es sind also in dem Steckerteil bzw. der erstgenannten Stiftleiste Durchgangsöffnungen für die Steckerstifte der zweiten Stiftleiste vorgesehen, und in diese greifen die Steckerstifte der zweiten Stiftleiste bei der Montage ein. In der Regel werden bei einer solchen Anordnung die zweiten Steckerstifte eine andere Länge aufweisen als die ersten; je nach konkreter Geometrie des Motoraufbaus werden sie insbesondere deutlich länger sein als diese.

Die erste und zweite Mehrzahl von Steckerstiften ist insbesondere jeweils in einer Reihe angeordnet. Bei einem 3-Phasen-Motor umfaßt dann jede Reihe drei Steckerstifte.

Nach obigem sind die Spulen- bzw. Wickeldrähte mit den zugehörigen Steckerstiften bzw. Leiterbahnen einer Leiterplatte im wesentlichen unmittelbar verbunden. Dies schließt auch die Verbindung über ein aktives oder passives elektrisches Bauelement, insbesondere eine Diode, ein.

Die elektrische Verbindung kann auf stoffschlüssige Weise, insbesondere durch Schweißen, Löten oder Verkleben mit einem leitfähigen Kleber, hergestellt sein. In einer alternativen Ausführung kann es sich um eine form- und/oder kraftschlüssige Verbindung handeln, die etwa durch Klemmen gebildet ist.

Die Spulenträger sind bevorzugt jeweils einteilig gebildet und weisen eine schlitzförmige Öffnung auf, in der der Spulenkörper insbesondere durch eine Hinterschneidung oder Rastverbindung gehalten ist.

In einer Ausführung mit spezieller praktischer Bedeutung hat der Mehrphasen-Motor zwei Statorteile und demgemäß zwei Spulen mit entsprechenden Verbindungsstücken zur Führung bzw. Halterung der jeweiligen Spulendrahtabschnitte.

In einer ersten bevorzugten Ausbildung der Verbindungsstücke weisen diese einen Drahtkanal, also eine langgestreckte Führung auf, in der der entsprechende Wickeldrahtabschnitt aufgenommen ist.

In einer anderen Ausführung sind die Verbindungsstücke im Sinne eines Isolierstoffkernes ausgeführt, auf dem der jeweilige Wickeldrahtabschnitt (im wesentlichen ohne umhüllende Abschnitte) frei auf einer Außenfläche liegt.

Der vorgeschlagene Mehrphasen-Motor weist ein Motorgehäuse auf, welches in einer zweckmäßigen Ausführung einstückig mit einem Steckergehäuse gebildet ist.

Der Aufbau der wesentlichen Funktionskomponenten des Motors als solcher, d. h. des Rotors und der Statorteile, insbesondere der Statorspulen, ist dem Fachmann an sich bekannt und entspricht beispielsweise dem in der DE 199 09 227 A1 beschriebenen Aufbau.

Vorteile und Zweckmäßigkeiten der Erfindung ergeben sich im übrigen aus den Unteransprüchen sowie der nachfolgenden Beschreibung einer bevorzugten Ausführungsform anhand der Figuren. Von diesen zeigen:

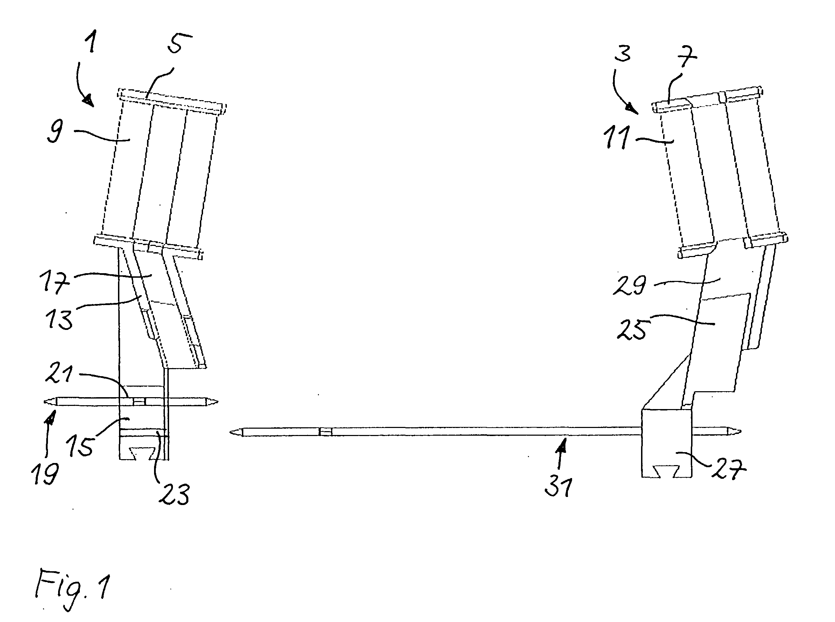

- Fig. 1: eine Seitenansicht zweiter Statorteile eines Mehrphasen-Motors gemäß einer Ausführungsform der Erfindung, jeweils mit Verbindungsstück und Stiftleiste,
- Fig. 2: eine perspektivische Darstellung der Statorteile gemäß Fig. 1,
- Fig. 3: eine Seitenansicht der Statorteile gemäß Fig. 1 und 2 im montierten Zustand,
- Fig. 4: eine perspektivische Darstellung der Anordnung nach Fig. 3 und
- Fig. 5: eine perspektivische Darstellung des Motorgehäuses mit der eingesetzten Statorteil-Anordnung nach Fig. 1 bis 4.

Die Figuren zeigen in verschiedenen Ansichten eine aus zwei Statorteilen 1 und 3 mit zugehörigen Anschlußmitteln bestehende Statoranordnung eines Schritt- bzw. Synchronmotors. Die Statorteile 1 und 3 haben je einen Kunststoff-Spulenträger 5 bzw. 7, der einen in üblicher Weise aus übereinander geschichteten stanzpaketierten Blechen bestehenden Statorkern (in den Figuren nicht sichtbar) und eine auf diesen gewickelte Spule 9 bzw. 11 umfaßt.

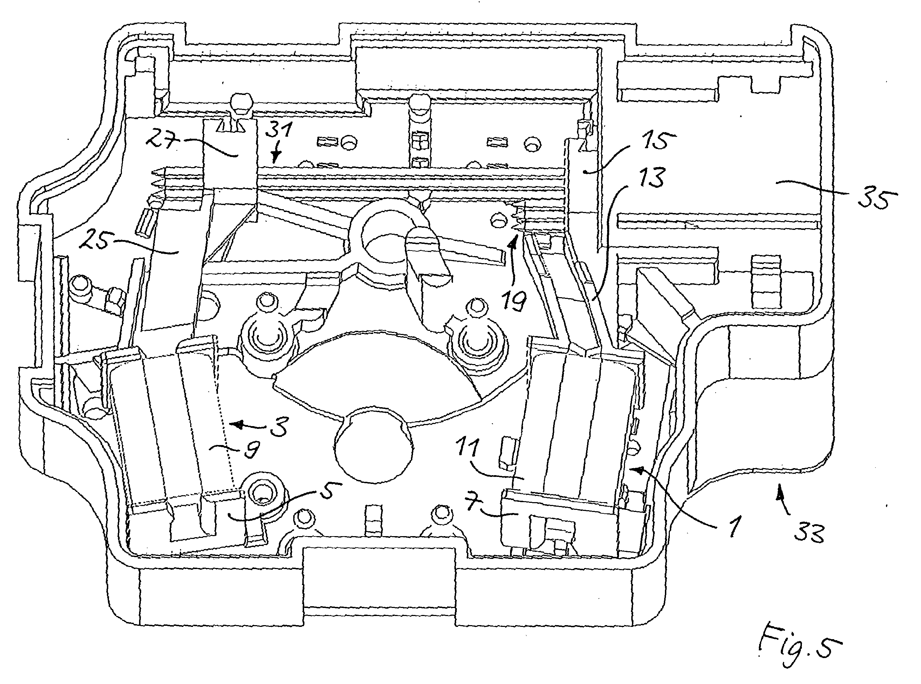

An den Kunststoff-Spulenträger 5 des ersten Statorteils 1 sind einstückig ein erstes Kunststoff-Verbindungsstück 13 sowie ein Steckerteil bzw. eine erste Stiftleiste 15 angeformt. Im Kunststoff-Verbindungsstück 13 verläuft ein Wickeldrahtabschnitt 17 des Wickeldrahts der Spule 9 von dieser bis zu ersten Steckerstiften 19, die in die Stiftleiste 15 fest eingesetzt sind. Das Kunststoff-Verbindungsstück 13 hat eine mehrfach abgewinkelte Gestalt, die - wie in Fig. 5 zu erkennen ist - an die räumliche Anordnung des Statorteils 1 im Gehäuse des Mehrphasen-Motors relativ zu einem an das Gehäuse angeformten Steckerteil gewählt ist. Die Wickeldrahtabschnitte 17 sind mit den Steckerstiften 19 an der Stiftleiste 15 elektrisch leitend fest verbunden, insbesondere verlötet oder verschweißt. Neben den Durchgangsbohrungen 21, in denen die Steckerstifte 19 fest eingefügt sind, weist die Stiftleiste 15 noch eine weitere Reihe von Durchgangsbohrungen 23 auf, deren Funktion weiter unten erläutert wird.

An den Kunststoff-Spulenträger 7 des zweiten Statorteils 3 ist ebenfalls ein Kunststoff-Verbindungsstück 25 angeformt, an dessen vom Spulenträger 7 abgewandten Ende eine zweite Stiftleiste 27 angeformt ist. Analog zur Ausführung der Anschlußmittel des ersten Statorteils 1 nimmt auch hier das Kunststoff-Verbindungsstück 25 Wickeldrahtabschnitte 29 des Wickeldrahtes der Spule 11 auf, die ... zu in der Stiftleiste 27 fest angebrachten Steckerstiften 31 verlaufen. Die Verbindung zwischen den Wickeldrahtabschnitten 29 und den Steckerstiften 31 ist auf die gleiche Weise hergestellt wie beim ersten Statorteil 1. Auch das zweite Kunststoff-Verbindungsstück 25 ist in seiner Gestalt durch mehrfache Abwicklung an die Lage des zugehörigen Statorteils 3 relativ zum Steckerteil im Motorgehäuse angepaßt.

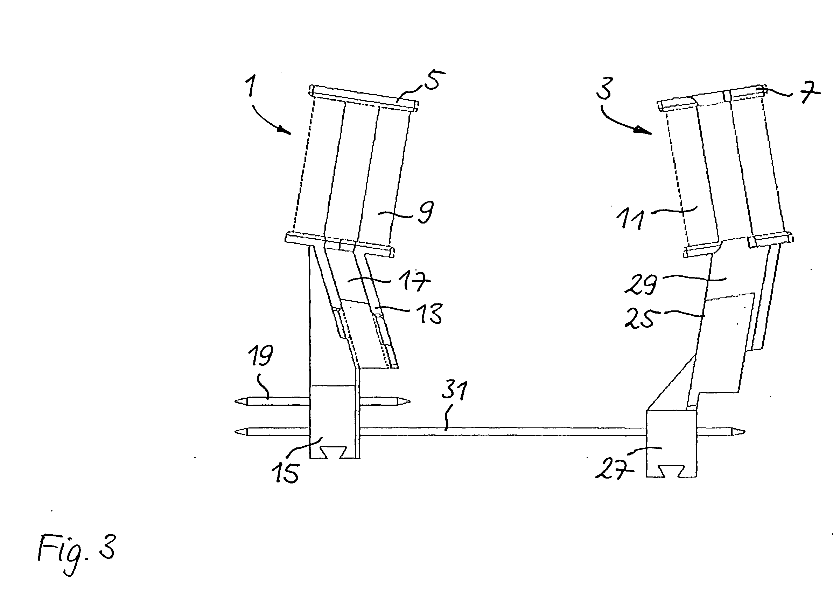

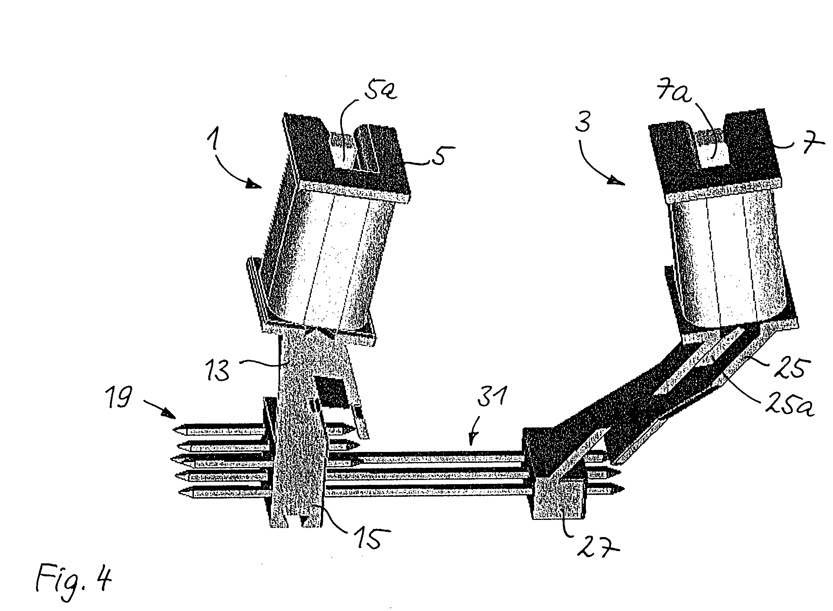

Wie in Fig. 3 und 4 zu erkennen ist, werden die beiden Statorteile 1, 3 über die Steckerstiftgruppe 31 des zweiten Statorteils miteinander in der Weise verbunden, daß die in der zweiten Stiftleiste 27 fest angebrachte Steckerstiftgruppe 31 in die Durchgangsöffnungen 23 der ersten Stiftleiste 15 eingeführt werden, bis sie am anderen Ende der Stiftleiste ebenso weit aus dieser hervorstehen wie die dort primär fest eingesetzten Steckerstifte 19. Aus der Stiftleiste 15 ragt somit im miteinander verbundenen Zustand des ersten und zweiten Statorteils 1, 3 eine zweireihige Anordnung aus jeweils drei Steckerstiften 19, 31 hervor.

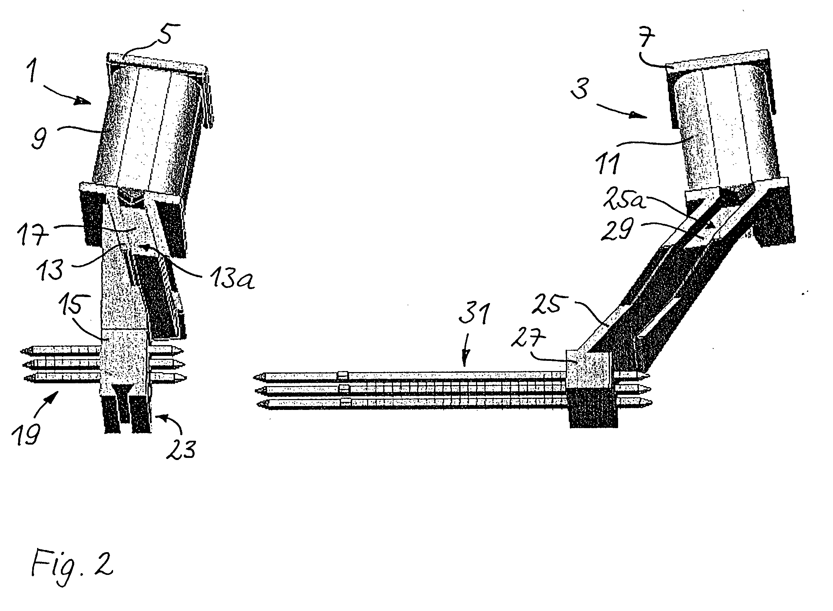

In Fig. 2 ist gut zu erkennen, daß die Kunststoff-Verbindungsstücken 13, 25 jeweils einen von Seitenwandungen begrenzten Wickeldrahtkanal 13a, 25a aufweisen, in dem die die Verbindung zu den Steckerstiften 19, 31 herstellenden Wickeldrahtabschnitte 17, 29 geführt und mechanisch geschützt sind. In Fig. 4 ist zu erkennen, daß die Kunststoff-Spulenträger 5, 7 jeweils einen Schlitz 5a, 7a aufweisen, in im (in den Figuren nicht gezeigten) fertig montierten Zustand zugehörigen Statorblechpakete in annähernder U-Form aufgenommen sind.

In Fig. 5 ist die Anordnung der Statorteile 1, 3 in einem Kunststoff-Motorgehäuse 33 mit einstükkig angeformtem Steckergehäuse 35 dargestellt. Die Einzelteile des Motorgehäuses 33 sind im Zusammenhang mit der Erfindung nicht von größerer Bedeutung, so daß auf deren Beschreibung hier verzichtet werden kann. Es wird lediglich darauf hingewiesen, daß die Stiftleiste 15 direkt in das Steckergehäuse 35 eingreift und die aus der Stiftleiste 15 hervorstehenden Enden der Steckerstiftgruppen 19, 31 Anschlußstifte im Steckergehäuse darstellen.

Die Ausführung der Erfindung ist nicht auf dieses oben beschriebene Beispiel beschränkt, sondern auch in einer Vielzahl von Abwandlungen möglich, die im Rahmen fachgemäßen Handelns liegen. Auf solche modifizierten Ausführungen wurde weiter oben bereits allgemein hingewiesen. Ergänzend wird noch angemerkt, daß die Spulenträger zur Aufnahme zusätzlicher passiver oder aktiver elektrischer Bauelemente in ihrer Gestalt geeignet modifiziert - insbesondere auch für eine SMD-Montage derartiger Bauelemente ausgebildet - sein können. Die Verbindungsstücken und/oder die Stiftleisten können in ihrer Form derart abgewandelt sein, daß eine direkte Verbindung zu einer Trägerplatte elektrischer Bauteile oder einem vergleichbaren Trägermedium (gemäß an sich bekannten Anordnungen der Mechatronik) möglich ist. Die Position der Kontaktstellen ist in einer solchen modifizierten Anordnung weitgehend frei wählbar, so daß sich in vorteilhafter Weise Freiheitsgrade für das Layout der Motor- und Bauelementeanordnung ergeben.

### Bezugszeichenliste

- 1,3: Statorteil
- 5, 7: Kunststoff-Spulenträger
- 5a, 7a: Schlitz
- 9,11: Spule
- 13,25: Kunststoff-Verbindungsstück
- 13a, 25a: Wickeldrahtkanal
- 15,27: Stiftleiste
- 17, 29: Wickeldrahtabschnitte
- 19, 31: Steckerstifte
- 21, 23: Durchgangsbohrungen
- 33: Kunststoff-Motorgehäuse
- 35: Steckergehäuse

## Patentansprüche

1. Mehrphasen-Motor, insbesondere Schrittmotor oder Synchronmotor, mit einem Rotor und im wesentlichen konzentrisch zum Rotor angeordneten Statorteilen, die jeweils einen Kern und eine aus einem Wickeldraht auf diesen gewickelte Spule aufweisen, sowie einem Steckerteil mit Steckerstiften oder einer Leiterplatte mit Leiterbahnen zum elektrischen Anschluß an eine Stromversorgung,
**dadurch gekennzeichnet,** daß
die Wickeldrähte im wesentlichen direkt mit den Steckerstiften oder Leiterbahnen verbunden sind und
zwischen jeder Spule und dem Steckerteil bzw. der Leiterplatte ein elektrisch isolierendes Verbindungsstück vorgesehen ist, welches einen Abschnitt des zugehörigen Wickeldrahtes aufnimmt.

2. Mehrphasen-Motor nach Anspruch 1,
**dadurch gekennzeichnet,** daß
die Spulen jeweils in einem Spulenträger aufgenommen sind, der mit dem jeweiligen Verbindungsstück einstückig ausgebildet oder im wesentlichen unbeweglich verbunden ist.

3. Mehrphasen-Motor nach Anspruch 1 oder 2,
**dadurch gekennzeichnet,** daß
jedes Verbindungsstück mit einer die jeweiligen Steckerstifte haltenden Stiftleiste einstückig ausgebildet ist oder im wesentlichen unbeweglich verbunden ist.

4. Mehrphasen-Motor nach Anspruch 2 und 3,
**dadurch gekennzeichnet,** daß
die Spulenträger jeweils einstückig mit dem zugehörigen Verbindungselement und der Stiftleiste ausgebildet sind.

5. Mehrphasen-Motor nach einem der Ansprüche 2 bis 4,
**dadurch gekennzeichnet**, daß
der Spulenträger einer der Spulen mit dem zugehörigen Verbindungsstück und einem Steckergehäuse einstückig ausgebildet ist.

6. Mehrphasen-Motor nach einem der Ansprüche 2 bis 4,
**dadurch gekennzeichnet,** daß
eine der Stiftleisten mittels einer Rastverbindung ein Steckergehäuse hält.

7. Mehrphasen-Motor nach einem der vorangehenden Ansprüche,
**dadurch gekennzeichnet,** daß
in dem Steckerteil eine erste Mehrzahl von Steckerstiften fest angebracht und eine zweite Mehrzahl von Steckerstiften, die in einer separaten Stiftleiste fest angebracht sind, lösbar gehaltert ist.

8. Mehrphasen-Motor nach Anspruch 7,
**dadurch gekennzeichnet,** daß
die erste und zweite Mehrzahl von Steckerstiften jeweils in einer Reihe angeordnet ist.

9. Mehrphasen-Motor nach einem der vorangehenden Ansprüche,
**dadurch gekennzeichnet,** daß
mindestens ein Teil der Wickeldrähte über ein aktives oder passives elektrisches Bauelement, insbesondere eine Diode, mit dem zugehörigen Steckerstift bzw. der zugehörigen Leiterbahn verbunden ist.

10. Mehrphasen-Motor nach einem der vorangehenden Ansprüche,
**dadurch gekennzeichnet,** daß
die Wickeldrähte mit den Steckerstiften bzw. Leiterbahnen oder dem elektrischen Bauelement stoffschlüssig, insbesondere durch Schweißen, Löten oder Verkleben, elektrisch leitend verbunden sind.

11. Mehrphasen-Motor nach einem der Ansprüche 1 bis 9,
**dadurch gekennzeichnet,** daß
die Wickeldrähte mit den Steckerstiften bzw. Leiterbahnen oder dem elektrischen Bauelement form- und/oder kraftschlüssig, insbesondere durch Klemmen, elektrisch leitend verbunden sind.

12. Mehrphasen-Motor nach einem der Ansprüche 2 bis 11,
**dadurch gekennzeichnet,** daß
die Spulenträger jeweils einteilig ausgebildet sind und eine schlitzförmige Öffnung aufweisen, in der der Spulenkörper, insbesondere gehalten durch eine Rastverbindung, aufgenommen ist.

13. Mehrphasen-Motor nach einem der vorangehenden Ansprüche,
**gekennzeichnet durch**
zwei Spulen mit entsprechenden Verbindungsstücken.

14. Mehrphasen-Motor nach einem der vorangehenden Ansprüche,
**dadurch gekennzeichnet,** daß
mindestens ein Teil der Verbindungsstücke einen Drahtkanal aufweist, in dem der Wickeldrahtabschnitt geführt ist.

15. Mehrphasen-Motor nach einem der vorangehenden Ansprüche,
**dadurch gekennzeichnet,** daß
bei mindestens einem Teil der Verbindungsstücke der jeweilige Wickeldrahtabschnitt frei auf einer Außenfläche liegt.

16. Mehrphasen-Motor nach einem der vorangehenden Ansprüche,
**gekennzeichnet durch**
ein einstückig mit einem Steckergehäuse ausgebildetes Motorgehäuse.
